# EUROPÄISCHE PATENTANMELDUNG

(11) **EP 1 577 151 A2**
(43) Veröffentlichungstag der Anmeldung: **21.09.2005**
(21) Anmeldenummer: 05005673.8
(22) Anmeldetag: 16.03.2005
(51) Int. Cl.: B60N 2/02, B60N 2/50

(54) **Fahrzeugsitz für ein Kraftfahrzeug**

(30) Priorität: 17.03.2004 DE 102004013401
(71) Anmelder: DaimlerChrysler AG, 70567 Stuttgart (DE)
(72) Erfinder: Kern, Simon, 60528 Frankfurt (DE); Maas, Jürgen, Dr., 65779 Kelkheim (DE)

(57) **Zusammenfassung**

Die Erfindung betrifft einen Fahrzeugsitz (1) mit einer aktiven Sitzfederung. Die Sitzfederung weist eine Regelvorrichtung (4) auf, die ein beweglich gelagertes Sitzkissen (11) steuert.

Um einen guten Federungskomfort über einen großen Amplitudenbereich zu erhalten, wird vorgeschlagen, dass die Regelvorrichtung (4) eine Reglerstruktur aufweist, die zwei Reglertypen (41, 42) anhand einer Überblendfunktion (43) miteinander kombiniert.

## Beschreibung

Die Erfindung betrifft einen Fahrzeugsitz für ein Kraftfahrzeug nach den Merkmalen des Oberbegriffs des Anspruchs 1.

Die JP 09 109 757 A zeigt einen Fahrzeugsitz der eine aktive Sitzfederung aufweist. Dort werden vom Fahrzeugboden herleitende Vibrationen mittels elektrischer Aktoren kompensiert. Eine Regelvorrichtung ermittelt mittels Beschleunigungssensoren die Beschleunigung von Fahrzeug und Sitz und steuert die elektrischen Aktoren so, dass die Vibrationen des Fahrzeugs weitgehend kompensiert werden.

Die der vorliegenden Erfindung zu Grunde liegende Aufgabe ist es, einen Fahrzeugsitz mit aktiver Sitzfederung für ein Kraftfahrzeug zu schaffen, der bei unterschiedlichsten Schwingungsanregungen besonders komfortabel ist und eine möglichst gute Schwingungsunterdrückung aufweist.

Diese Aufgabe wird erfindungsgemäß durch einen Fahrzeugsitz mit den Merkmalen des Anspruchs 1 gelöst.

Der Fahrzeugsitz weist eine Sitzstruktur mit einem Sitzkissen und vorzugsweise mit einer mit dem Sitzkissen mechanisch verbundenen Rückenlehne auf, welches über eine von einer Regelvorrichtung steuerbare Stützvorrichtung an einem fahrzeugfesten Sitzunterbau gelagert ist. Die Regelvorrichtung weist eine Reglerstruktur auf, welche zwei Reglertypen miteinander zu einem gemeinsamen Übertragungsglied mit einer bestimmten Übertragungskennlinie kombiniert. Dabei werden die beiden Reglertypen anhand einer in der Regelvorrichtung abgespeicherten Überblendfunktion miteinander kombiniert. Diese Überblendfunktion weist dabei einen Verlauf auf, der von der Schwingungsamplitude der Sitzstruktur, vorzugsweise des Sitzkissens abhängig ist. Durch diese in der Regelvorrichtung umgesetzte Reglerstruktur ist es möglich zwei unterschiedliche Reglertypen zu berücksichtigen, die je nach Amplitude der Sitzstruktur bzw. des Sitzkissens unterschiedliches Regelverhalten aufweisen. Damit wird erreicht, dass über einen weiten Schwingungsamplitudenbereich der Sitzstruktur, bzw. des Sitzkissens eine jeweils individuell angepasste Reglercharakteristik zum Tragen kommt und dadurch die aktive Sitzfederung eine dem jeweiligen Schwingungsamplitudenbereich besonders gut angepasste Reglercharakteristik aufweist.

In einer Vorrichtung kann insbesondere vorgesehen sein, dass der erste Reglertyp ein Regelverhalten eines passiv gefederten Sitzes, d. h. eines Sitzes der über ein passives Feder/Dämpfersystem gefedert ist, aufweist. Der zweite Reglertyp kann ein Regelverhalten eines aktiv gefederten Sitzes aufweisen. Dadurch wird ermöglicht, dass in einem Schwingungsamplitudenbereich das Schwingungs- und/oder Dämpfungsverhalten des erfindungsgemäßen Sitzes in etwa dem Schwingungs- und/oder Dämpfungsverhalten eines passiv gefederten Sitzes entspricht. In einem anderen Schwingungsamplitudenbereich wird dabei über den zweiten Reglertyp ein Reglerverhalten modelliert, welches einem aktiv gefederten Sitz entspricht.

Das Ziel einer aktiven Sitzfederung ist es, Schwingungen oder Vibrationen die einen Insassen beeinträchtigen können, zu unterdrücken. Dabei entsteht ein Zielkonflikt bei Schwingungen, die eine große Schwingungsamplitude aufweisen. Würde man solche Schwingungen mittels einer aktiven Sitzfederung unterdrücken, wären große Relativbewegungen zwischen Sitz und Fahrzeug erforderlich. Zu dem müsste die Mechanik des Sitzes auf sehr große Hubbewegungen ausgelegt sein, wofür in der Regel der Bauraum in Fahrzeugen, insbesondere in Personenkraftwagen nicht zur Verfügung steht. Auch wird durch solch große Relativbewegungen zwischen Kabine und Sitz das Bedienen von Lenkung und/oder Pedalerie nachhaltig beeinträchtigt.

Um diesen Zielkonflikt aufzulösen, wird mit der vorliegenden Erfindung eine Regelvorrichtung mit einer Reglerstruktur entworfen, welche insbesondere höherfrequente Schwingungen weitgehend unterdrückt und zugleich niederfrequente Schwingungen mit großer Schwingungsamplitude überwiegend von der Konsole auf den Sitz überträgt. Dieses kann insbesondere dadurch umgesetzt werden, dass der erste Reglertyp einen passiv gefederten Sitz modelliert und dann zum Einsatz kommt, wenn relativ großhubige niederfrequente Schwingungen auftreten. Der zweite Reglertyp modelliert dabei das Regelverhalten eines aktiv gefederten Sitzes, welches individuell härter oder weicher einstellbar ist, vorzugsweise angepasst an die jeweils auftretenden Schwingungen. Mit dem zweiten Reglertyp eines aktiv gefederten Sitzes gelingt es dann ein Kleinsignalverhalten des Sitzes zu erreichen, welches um die vom Fahrer voreingestellte Ruhelage des Sitzes, eine höchste Schwingungsunterdrückung gewährleistet.

In einer Ausführung kann vorgesehen sein, dass an einem Sitzkissen oder an einer Rückenlehne oder an einem Sitzrahmen Sensoren zur Aufnahme von Schwingungen der gesamten Sitzstruktur angeordnet sind. Dadurch wird ein einfacher konstruktiver Aufbau des Fahrzeugsitzes ermöglicht.

Insbesondere ist in einer Ausführung vorgesehen, dass die Überblendfunktion bei Schwingungsamplituden der Sitzstruktur bzw. des Sitzkissens in einem Bereich oberhalb eines in der Regelvorrichtung variabel festlegbaren Amplitudenmaximalwertes nur den ersten Reglertyp berücksichtigt. Dadurch wird erreicht, dass insbesondere bei sehr großen Amplituden, die oberhalb eines vorher festlegbaren Amplitudenmaximalwertes liegen, ein Regelverhalten realisiert wird, welches dem ersten Reglertyp entspricht. Dadurch kann erreicht werden, dass das Schwingungs- und/oder Dämpfungsverhalten zum Beispiel eines passiv gedämpften herkömmlichen Kraftfahrzeugsitzes für große Amplituden zum Tragen kommt.

Weiterhin kann vorgesehen sein, dass die Überblendfunktion bei Schwingungsamplituden der Sitzstruktur bzw.des Sitzkissens in einem Bereich unterhalb eines in der Regelvorrichtung variabel festlegbaren festen Amplitudenwertes ein konstantes Überblendungsverhältnis von dem ersten Reglertyp zu dem zweiten Reglertyp aufweist. Damit wird ermöglicht, dass in einem Bereich kleiner Schwingungsamplituden ein Regelverhalten modelliert wird, welches einem aktiv gefederten Fahrzeugsitzes entspricht und ein möglichst gutes Kleinsignalverhalten, das heißt eine möglichst gute Schwingungsunterdrückung aufweist.

Ferner kann vorgesehen sein, dass für einen bestimmten Schwingungsamplitudenbereich, vorzugsweise bei kleinen Schwingungsamplituden unterhalb eines festlegbaren Amplitudenminimalwertes, ein konstantes Überblendungsverhältnis der beiden Reglertypen anhand eines in der Regelvorrichtung speicherbaren Überblendungsparameters festlegbar ist. Dabei kann dieser Überblendungsparameter experimentell ermittelt und fest in einem Speicher der Regelvorrichtung gespeichert werden oder von einem Benutzer individuell veränderbar sein.

In einer vorteilhaften Ausführung ist vorgesehen, dass die Regelvorrichtung den Überblendungsparameter anhand dem Gleichrichtwert der vom Sitzkissen durchgeführten Schwingung bestimmt und individuell abspeichert. Dadurch ist eine besonders gute Adaption der aktiven Sitzfederung an die vorherrschenden Straßenverhältnisse und an die auftretenden Schwingungen möglich.

Um eine besonders gute Schwingungsunterdrückung auch in einem Bereich zwischen dem Amplitudenmaximalwert und dem Bereich der konstanten Überblendfunktion sicherzustellen ist vorgesehen, dass die Überblendfunktion bei Schwingungsamplituden der Sitzstruktur bzw.des Sitzkissens in einem Bereich zwischen dem Amplitudenmaximalwert und dem Amplitudenminimalwert einen parabelförmigen Verlauf aufweist.

In einer Ausführung ist vorgesehen, dass die Regelvorrichtung mehrere Sensoren aufweist, die Meßsignale generieren anhand denen die Regelvorrichtung die Stützvorrichtung steuert. Insbesondere ist vorgesehen, dass der Fahrzeugsitz einen Freiheitsgrad aufweist. Das heißt, dass die Sitzstruktur, insbesondere das Sitzkissen in einem Freiheitsgrad beweglich gelagert ist und die Regelvorrichtung einen fahrzeugfesten installierten ersten Beschleunigungssensor und einen mit dem Sitzkissen verbundenen zweiten Beschleunigungssensor zur Aufnahme der Beschleunigungswerte von Fahrzeug und Sitzstruktur bzw. Sitzkissen aufweist. Dadurch können die Beschleunigungswerte von Sitzstruktur und Fahrzeug getrennt erfasst und zur Regelung herangezogen werden.

Um eine besonders feinfühlige Regelung zu erreichen ist vorgesehen, dass die Vorrichtung einen dritten Sensor nämlich einen Wegsensor aufweist, der die Relativposition von Sitzkissen und Sitzunterbau bestimmt. Durch diesen zusätzlichen Wegsensor, der neben dem Beschleunigungswerten noch eine Positionsinformation liefert, können Offsets vermieden und so eine besonders feinfühlige Regelung des Schwingungsverhaltens erzielt werden.

Neben der beweglichen Lagerung der Sitzstruktur bzw. des Sitzkissens in einem Freiheitsgrad kann die Sitzstruktur bzw. das Sitzkissen auch in mehreren Freiheitsgraden beweglich gelagert sein. So kann es vorgesehen sein, das Sitzkissen zum Bespiel in zwei oder drei Freiheitsgraden beweglich zu lagern. Ein erster Freiheitsgrad kann dabei zum Beispiel die vertikale Auf- und Abbewegung des Sitzes in Richtung einer Fahrzeughochachse darstellen und kann als Z-Achse bezeichnet werden. Ein zweiter Freiheitsgrad kann dabei die Bewegung des Sitzes in Fahrzeuglängsrichtung also eine X-Achse sein. Zu dem kann ein dritter Freiheitsgrad berücksichtigt werden, der zum Beispiel die Y-Achse umfasst. Alternativ kann auch ein weiterer Bewegungsfreiheitsgrad zum Beispiel eine Nick- oder Rollbewegung und eine Längs- oder Querachse des Sitzes beziehungsweise des Fahrzeugs berücksichtigt und mittels der geregelten Stützvorrichtung ausgeregelt werden.

Um bei einem Sitz mit mehr als einem Freiheitsgrad eine besonders gute Regelegung zu ermöglichen ist vorgesehen, dass die Regelvorrichtung je geregeltem Freiheitsgrad jeweils einen mit dem Fahrzeug verbundenen Beschleunigungssensors sowie ein mit der Sitzstruktur bzw. dem Sitzkissen verbundenen zweiten Beschleunigungssensor aufweist um eine nach Freiheitsgrad getrennte Aufschaltung der Beschleunigungswerte von Fahrzeug und Sitzkissen zu ermöglichen. Des Weiteren kann vorgesehen sein, dass die Regelvorrichtung eine Reglerstruktur aufweist, die je geregeltem Freiheitsgrad einen separaten eigenständigen Regler modelliert, der eine Regelung der Stützvorrichtung selektiv für einen Freiheitsgrad ermöglicht.

Um eine Systembedingte Koppelung der Freiheitsgrade untereinander zu verhindern, kann vorgesehen sein, dass in der Regelvorrichtung Kompensationsmaßnahmen, vorzugsweise ein Entzerrer- oder Entkopplungsnetzwerk, vorgesehen ist. Diese Kompensationsmaßnahmen verhindern inhärente Kopplungen zwischen den einzelnen Freiheitsgraden beziehungsweise gleichen diese aus.

Die aktive Sitzfederung kann eine Regelvorrichtung in Form eines elektronischen Steuergerätes aufweisen, welches einen Mikroprozessor, elektronische Speicher und Schnittstellen aufweist. Ebenso kann die Regelvorrichtung oder Teile der Regelvorrichtung mit Hilfe von Analogrechnern realisiert werden.

Die Erfindung ist anhand eines in den Zeichnungen näher dargestellten Ausführungsbeispiels im Folgenden näher beschrieben. Es zeigen:
- Fig. 1: eine schematische Seitenansicht eines Fahrzeugsitzes mit aktiver Sitzregelung,
- Fig. 2: eine schematische Darstellung Überblendfunktion der Regelungsvorrichtung,
- Fig. 3: einen schematischen Aufbau der Regelvorrichtung zur Ermittlung eines Überblendkoeffizienten,
- Fig. 4: einen schematischen Aufbau der Regelungsstruktur der Regelungsvorrichtung.

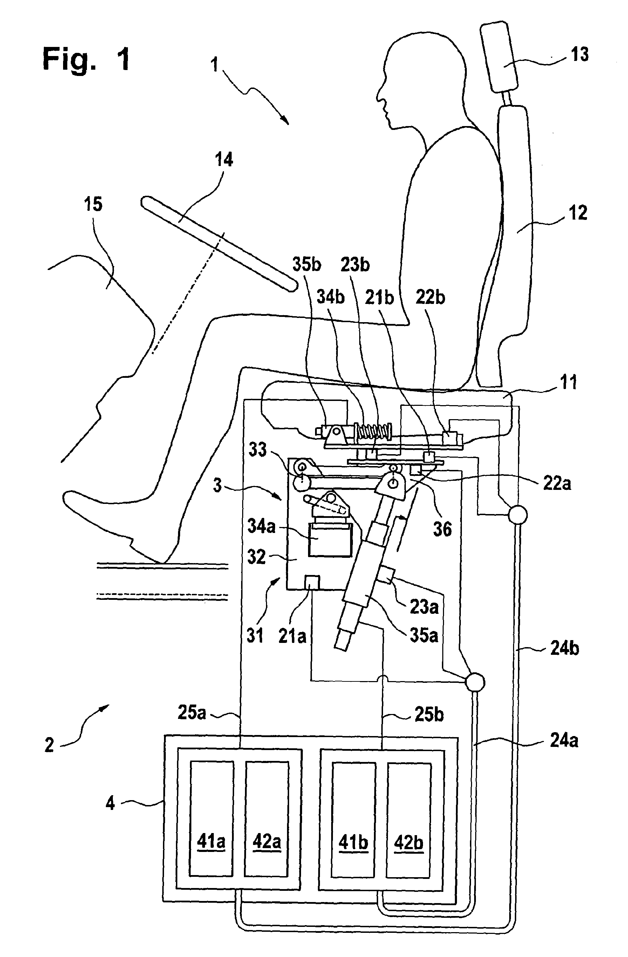

Die Figur 1 zeigt in schematischer Seitenansicht einen mit einem Fahrer besetzten Fahrzeugsitz 1. Der Fahrzeugssitz ist in einer Nutzfahrzeugkabine angeordnet, wobei in der Figur 1 schematisch die Armaturentafel 15 sowie ein Lenkrad 14 und der Fahrzeugkabinenboden angedeutet ist. Anhand dieser Teile lässt sich die relative Einbaulage des Fahrzeugsitzes 1 in der Fahrzeugkabine erkennen.

Der Fahrzeugsitz 1 weist eine Sitzstruktur auf, die ein Sitzkissen 11, eine mit dem Sitzkissen verbundene Rückenlehne 12, sowie einen tragenden Sitzrahmen aufweist. Ein Sitzunterbau 31 ist mit dem Fahrzeugboden fest verbunden ist. Auf dem Sitzunterbau 31 ist über ein Sitzpodest 36 ein Sitzkissen 11 beweglich gelagert. Das Sitzkissen 11 ist über ein Sitzrahmen mit einer Rückenlehne 12 des Fahrzeugsitzes verbunden. Am oberen Ende der Rückenlehne 12 ist eine Kopfstütze 13 angeordnet.

Eine von einer Regelvorrichtung 4 ansteuerbare Stützvorrichtung 6 ist zwischen den Sitzunterbau 31 und dem Sitzkissen 11 angeordnet. Die Stützverbindung 6 verbindet das Sitzkissen 11 beweglich mit dem fahrzeugfesten Sitzunterbau 31 und umfasst das Sitzpodest, einen Paralellogrammlenker 33 und ein Feder/Dämpfersystem. Das Sitzkissen 11 ist über die Stützvorrichtung 6 in Richtung der Fahrzeughochachse, der Zeitrichtung, und in Richtung der Fahrzeuglängsachse, der X-Richtung, beweglich gelagert. Somit weist der in Figur 1 dargestellte Fahrzeugsitz zwei Freiheitsgrade Z und X auf. Das Übertragungsverhalten der Stützvorrichtung 6 wird durch die Regelvorrichtung 4 gesteuert.

Der Sitzunterbau 31 weist einen Stützträger 32 auf, der fest mit dem Fahrzeugboden verbunden ist. An dem Stützträger 32 ist ein Stützdämpfer 35a sowie eine Stützfeder 34a angeordnet. Die Stützfeder wie auch der Stützdämpfer sind an ihrem einem Ende mit dem Stützträger 32 verbunden und an ihrem anderen Ende mit einem Parallelogrammlenkergestänge 33. Das Parallelogrammlenkergestänge 33 ermöglicht eine Bewegung des Sitzkissens 11 in Z-Richtung und gewährleistet dabei eine Parallelverschiebung des mit dem Parallelogrammlenker 33 verbundenen Sitzpodests 36 bei allen Schwenk- und Schwingbewegungen des Fahrzeugsitzes 1.

Die Bewegung des Fahrzeugsitzes 1 beziehungsweise des Sitzkissens 11 in Z-Richtung wird dabei von dem Federdämpfersystem 34a, 35a bestimmt. Das Übertragungsverhalten dieses Federdämpfersystems welches ein Teil der aktiven Sitzfederung darstellt, ist durch steuern der Stellkräfte des Dämpfers 35a veränderbar. Der Dämpfer 35a weist hierfür einen elektrischen Aktor auf, der von der Regelvorrichtung 4 ansteuerbar ist.

Dem Freiheitsgrad in Z-Richtung zugeordnet sind 3 Sensoren, wobei ein erster Sensor 21a am Stützträger 32 fahrzeugfest angeordnet ist. Dieser erste Sensor 21a ist als Beschleunigungssensor ausgebildet und nimmt die Beschleunigungswerte des Fahrzeugs beziehungsweise der Fahrzeugkabine auf. Ein zweiter Sensor 22a ist am Sitzpodest 36 sitzkissenfest angeordnet. Er ist ebenfalls als Beschleunigungssensor ausgebildet. Dieser zweite Sensor 22a dient zur Aufnahme der Beschleunigungswerte des Sitzkissens 11. Weiterhin ist ein dritter Sensor 23a vorgesehen, welcher am Dämpfer 35a angeordnet ist und die Relativposition des Sitzpodestes 36 beziehungsweise des Sitzkissens 11 im Verhältnis zum Sitzunterbau 31 beziehungsweise zur Fahrzeugkabine aufnimmt. Diese drei Sensoren sind mittels einer Signalleitung 24a mit der Regelvorrichtung 4 verbunden und liefern an diese die relevanten Störgrößen für den Freiheitsgrad Z.

Das Sitzpodest 36 weist einen Schlitten 37 auf, der eine Bewegung des Sitzkissens 11 in Fahrzeuglängsrichtung erlaubt. Die Fahrzeuglängsrichtung verläuft dabei in Fahrtrichtung des Fahrzeugs. Die Bewegung des Schlittens 37 wird dabei von einem Federdämpfersystem, bestehend aus der Feder 34b und dem Dämpfer 35b kontrolliert. Der Dämpfer 35b weist dabei einen elektrischen Linearmotor auf, der von der Regelvorrichtung 4 angesteuert wird um das Schwingungsverhalten des Sitzes in X-Richtung, das heißt den Freiheitsgrad X zu regeln.

Weiterhin sind an dem Schlitten 37 drei Sensoren angeordnet, die dem Freiheitsgrad X zugeordnet sind. Ein erster Beschleunigungssensor 22b ist fahrzeugfest mit dem Sitzpodest 36 verbunden, so dass die Schwingungen in X-Richtung der Fahrzeugkabine von diesem Beschleunigungssensor aufgenommen werden. Ein zweiter Beschleunigungssensor 22b ist an dem Schlitten 37 so angeordnet, dass er mechanisch fest mit dem Sitzkissen 11 verbunden ist und dadurch die Beschleunigungswerte des Sitzkissens 11 aufnimmt. Ein dritter Sensor 23b ist an dem Schlitten 37, bzw. an dem Dämpfer 35b so angeordnet, dass er die Relativposition des Sitzkissens 11 im Verhältnis zu der Fahrzeugkabine beziehungsweise dem Sitzpodest 36 aufnimmt. Diese drei Sensoren liefern die Meßgrößen für die Regelungsvorrichtung 4 für den Freiheitsgrad in X-Richtung, und sind über eine Signalleitung 24 mit der Regelungsvorrichtung 4 verbunden.

Die Regelungsvorrichtung 4 weist eine Regelungsstruktur auf, die für jeden Freiheitsgrad X bzw. Z einen separaten Regler vorsieht. Für jeden Freiheitsgrad X bzw. Z weist die Regelvorrichtung 4 einen getrennten Regler auf, welcher intern identisch aufgebaut ist. Jeder dieser Regler besteht aus einer Kombination von zwei Reglertypen 41 und 42. Das Ausgangssignal der Regelvorrichtung 4 ist nach Freiheitsgraden aufgetrennt. Das Ausgangssignal 25a steuert dabei die Stützvorrichtung 6 des Fahrzeugssitzes in X-Richtung, insbesondere ist die Ausgangsleitung 25a mit dem Dämpfer 35b verbunden und steuert so das Übertragungsverhalten des Freiheitsgrades X. Das Ausgangssignal 25b der Regelvorrichtung 4 ist mit dem Dämpfer 35a zum Steuern des Übertragungsverhaltens des Z-Freiheitsgrades verbunden.

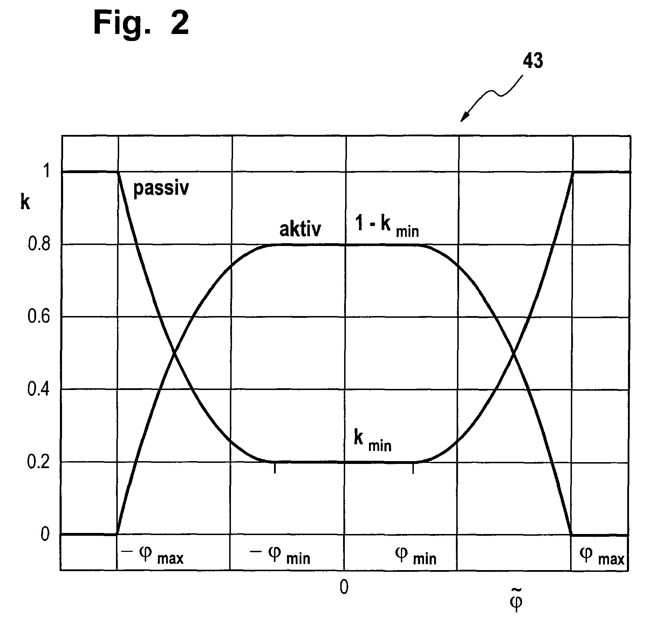

Um mit einer aktiven Sitzfederung einen über einen weiten Bereich von Schwingungsamplituden gleichbleibend guten Komfort zu erreichen, ist in der Regelvorrichtung 4 eine Reglerstruktur implementiert, die zwei Reglertypen 41 und 42 aufweist. Diese beiden Reglertypen 41, 42 werden anhand einer Überblendfunktion 43 miteinander kombiniert, wobei diese Überblendfunktion 43 in Figur 2 näher dargestellt ist. Diese Überblendfunktion soll unabhängig von der statischen Sitzeinstellung sein. Die Überblendfunktion 43 hängt von der Auslenkung des Sitzes um die Ruhelage ab, also der Schwingungsamplitude ϕ und liefert abhängig von der Schwingungsamplitude ϕ verschiedene Überblendwerte anhand derer die Regler 41 beziehungsweise 42 miteinander zu einem gemeinsamen Ausgangssignal Faz kombiniert werden.

In einem Bereich kleiner Schwingungsamplituden ϕ des Sitzes, das heißt in einem Bereich der kleiner ist als ϕmin und sich bis hin zu -ϕmin erstreckt, ist die Einstellung der Reglerkombination konstant. Das heißt die Reglertypen 41 und 42 werden mit einem konstanten Verhältnis Kmin beziehungsweise (1 - Kmin) miteinander kombiniert, um eine möglichst optimale Schwingungsunterdrückung im Kleinsignalverhalten der aktiven Sitzregelung zu erhalten. Übersteigt die Schwingungsamplitude der Sitzstruktur bzw. des Sitzkissens 11 den Wert ϕmin, so startet das dynamische Einblenden der passiven Sitzeinstellung, die in dem Reglertyp 41 modelliert ist. Dazu wird ein parabelförmiger Verlauf der Überblendfunktion 43 modelliert, der von dem Wert ϕmin bis zu dem Wert ϕmax der Schwingungsamplitude reicht.

Ab dem Wert ϕmax wird die Ausgangsgröße der Regelstruktur 4 hauptsächlich von dem Regler 41, der die passive Sitzregelung modelliert, bestimmt. Somit erreicht man eine Adaption beziehungsweise ein Überblenden verschiedener Regelungseinstellungen, um sowohl in Kleinsignalverhalten eine möglichst gute Schwingungsunterdrückung zu erhalten als auch im Großsignalverhalten ein für den Fahrer möglichst optimalen Komforteinstellung des Fahrzeugsitzes zu erreichen.

Neben der Schwingungsamplitude ϕ beziehungsweise den Parametern ϕmin und ϕmax ist weiterhin der Umblendkoeffizient Kmin eine in der Regelungsvorrichtung 4 veränderbare Größe. Um bei länger anhaltenden Anregungen der Fahrzeugkabine mit einer großen Amplitude den Sitz mit der Kabine besser mitführen zu können, wird der Parameter Kmin variabel ausgebildet. Dazu bestimmt die Regelvorrichtung 4 den Parameter Kmin anhand eines geschätzten Gleichrichtwertes der von der Sitzstruktur beziehungsweise dem Sitzkissen 11 durchgeführten Schwingung um die Ruhelage. Dabei wird der Gleichrichtwert anschließend auf ein Bereich von 0 bis 1 normiert. Demgemäß wird über den Wert K-min eine Amplitudensteuerung des Umblendvorganges erreicht, die eine möglichst gute und optimierte Anpassung des Regelungsverhaltens der aktiven Sitzfederung ermöglicht.

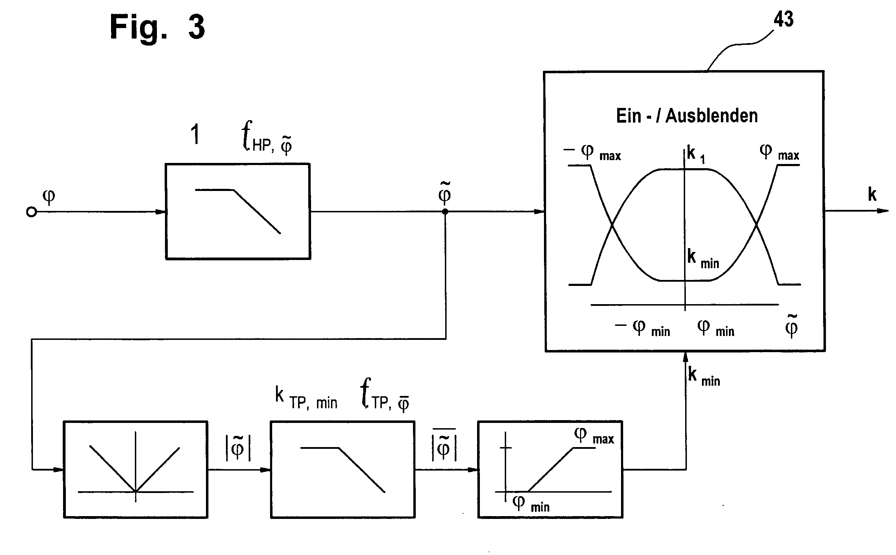

In der Figur 3 ist die Struktur der Regelvorrichtung 4 dargestellt, welche die Ermittlung des Umblendfaktors K-min ermöglicht. Zu diesem Zweck wird der Amplitudenwert ϕ gefiltert und ein Betragsmittelwert für die Schwingungsamplitude ϕ des Sitzes ermittelt. Anschließend wird aus diesem Betragsmittelwert der Amplitude ϕ der Gleichrichtwert ermittelt und normiert. Aus diesen Werten ermittelt die Regelvorrichtung den Umblendkoeffizienten Kmin mittels dem eine gesteuerte Komfortadaption der aktiven Sitzregelung anhand der von dem Fahrzeugsitz 1 durchgeführten Schwingungsamplitude durchgeführt wird.

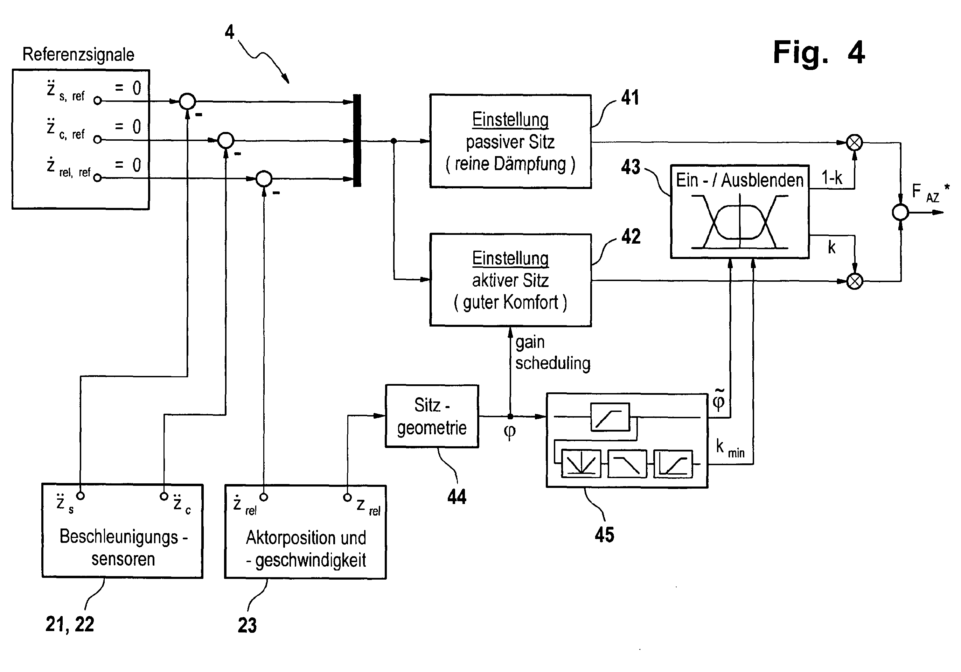

In Figur 4 ist exemplarisch die Regelungsstruktur der Regelungsvorrichtung 4 für den Freiheitsgrad z dargestellt. Ziel der Regelung ist es, die Schwingungsamplituden des Sitzes auf Null zu regeln. Dazu wird das Signal der Beschleunigungssensoren 21a und 21b beziehungsweise 22a und 22b sowie das Signal der Aktorposition bzw. der Relativgeschwindigkeit des Aktors als Meßgröße für die Regelvorrichtung 4 verwendet. Diese Meßgrößen werden den beiden Reglertypen 41, für den rein passiven Sitz, bzw. 42 für den aktiven Sitz zugeführt. Zu dem wird ein Modell, welches die Sitzgeometrie 44 berücksichtigt in der Reglerstruktur implementiert. Anhand der Schwingungsamplitude ϕ der Sitzstruktur beziehungsweise des Sitzkissens 11, wird gemäß der vorstehend beschriebenen Struktur der Regelvorrichtung 4 die Überblendfunktion 43 bzw. der Überblendfaktor Kmin ermittelt. Mit Hilfe des Faktors Kmin wird das Ausgangssignal des Reglers 41 und des Reglers 42 miteinander zu einem Ausgangssignal Faz kombiniert. Dieses Ausgangssignal steuert den Aktor des jeweils geregelten Freiheitsgrades an. Zusätzlich kann in der Regelungsstruktur noch die Kennlinie des Aktors berücksichtigt werden, um zu einer möglichst guten und genauen Regelung des Sitzes zu gelangen.

Die in Figur 4 gezeigte Reglerstruktur für den Freiheitsgrad Z, kann ebenso für den Freiheitsgrad X eingesetzt werden, in dem die entsprechenden Sensorsignale und Referenzsignale von Z durch X ersetzt werden. Ebenso kann eine Neige- oder Wankbewegung eines Fahrzeugsitzes berücksichtigt werden, in dem für den entsprechenden Freiheitsgrad ein Neigefreiheitsgrad α, eingesetzt wird.

## Patentansprüche

1. Fahrzeugsitz für ein Kraftfahrzeug mit einer aktiven Sitzfederung, wobei eine Sitzstruktur mit einem Sitzkissen über eine von einer Regelvorrichtung steuerbare Stützvorrichtung an einem fahrzeugfest angeordneten Sitzunterbau beweglich gelagert ist,
**dadurch gekennzeichnet,**
**dass** in der Regelvorrichtung (4) eine Reglerstruktur implementiert ist, die zwei Reglertypen (41, 42) miteinander zu einem Übertragungsglied kombiniert, wobei die Regelvorrichtung (4) die Kombination der zwei Reglertypen (41, 42) anhand einer in der Regelvorrichtung abgespeicherten Überblendfunktion (43) in Abhängigkeit der Schwingungsamplitude (ϕ) der Sitzstruktur (11) vornimmt.

2. Fahrzeugsitz nach Anspruch 1
**dadurch gekennzeichnet,**
**dass** der erste Reglertyp (41) ein Regelverhalten eines passiv gefederten Sitzes aufweist und der zweite Reglertyp (42) ein Regelverhalten eines aktiv gefederten Sitzes aufweist.

3. Fahrzeugsitz nach Anspruch 2,
**dadurch gekennzeichnet,**
**dass** die Überblendfunktion (43) bei Schwingungsamplituden der Sitzstruktur, vorzugsweise des Sitzkissens (11) in einem Bereich oberhalb eines in der Regelvorrichtung (4) variabel festlegbaren festen Amplitudenmaximalwertes (ϕmax) nur den ersten Reglertyp (41) berücksichtigt.

4. Fahrzeugsitz nach Anspruch 2 oder 3,
**dadurch gekennzeichnet,**
**dass** die Überblendfunktion (43) bei Schwingungsamplituden der Sitzstruktur, vorzugsweise des Sitzkissens (11) in einem Bereich unterhalb eines in der Regelvorrichtung (4) variabel festlegbaren festen Amplitudenminimalwertes (ϕmin) ein konstantes Überblendungsverhältnis des ersten Reglertyp (41) zum zweiten Reglertyp (42) aufweist.

5. Fahrzeugsitz nach Anspruch 4,
**dadurch gekennzeichnet,**
**dass** das konstante Überblendungsverhältnis anhand eines in der Regelvorrichtung (4) speicherbaren Überblendungsparameters (Kmin) festlegbar ist.

6. Fahrzeugsitz nach Anspruch 5,
**dadurch gekennzeichnet,**
**dass** die Regelvorrichtung (4) den Überblendungsparameter (Kmin) anhand dem Gleichrichtwert der vom Sitzkissen (11) durchgeführten Schwingung bestimmt und abspeichert.

7. Fahrzeugsitz nach einem der Ansprüche 3 bis 6,
**dadurch gekennzeichnet,**
**dass** die Überblendfunktion (43) bei Schwingungsamplituden der Sitzstruktur, vorzugsweise des Sitzkissens (11) in einem Bereich zwischen dem Amplitudenmaximalwert (ϕmax) und dem Amplitudenminimalwert (ϕmin) einen parabelförmigen Verlauf aufweist.

8. Fahrzeugsitz nach einem der vorhergehenden Ansprüche,
**dadurch gekennzeichnet,**
**dass** die Schwingung der Sitzstruktur über Schwingungssensoren erfolgt, die an dem Sitzkissen (11) oder an der Rückenlehne (12), oder an einem Sitzrahmen angeordnet sind.

9. Fahrzeugsitz nach einem der vorhergehenden Ansprüche,
**dadurch gekennzeichnet,**
**dass** das Sitzkissen (11) in einem Freiheitsgrad beweglich gelagert ist und die Regelvorrichtung (4) einen mit dem fahrzeugfesten Sitzunterbau (31) verbundenen ersten Beschleunigungssensor (21a, 21b) und einen mit dem Sitzkissen (11) verbundenen zweiten Beschleunigungssensor (22a, 22b) zur Aufnahme der Beschleunigungswerte von Fahrzeug und Sitzkissen aufweist.

10. Fahrzeugsitz nach Anspruch 9,
**dadurch gekennzeichnet**,
die Regelvorrichtung (4) einen mit der Stützvorrichtung (3) verbundenen dritten Sensor (23a, 23b) zur Aufnahme der Relativposition von Sitzkissen (11) und Sitzunterbau (31) aufweist.

11. Fahrzeugsitz nach einem der vorhergehenden Ansprüche,
**dadurch gekennzeichnet,**
**dass** das Sitzkissen (11) in mehr als einem Freiheitsgrad, vorzugsweise in drei Freiheitsgraden beweglich gelagert ist und die Regelvorrichtung (4) je Freiheitsgrad einen mit dem fahrzeugfesten Sitzunterbau (31) verbundenen ersten Beschleunigungssensor (21a, 21b) und einen mit dem Sitzkissen verbundenen zweiten Beschleunigungssensor (22a, 22b) aufweist, um eine nach Freiheitsgrad getrennten Aufschaltung der Beschleunigungswerte von Fahrzeug und Sitzkissen auszuwerten.
